# EUROPEAN PATENT APPLICATION

(11) **EP 4 485 651 A1**
(43) Date of publication of application: **01.01.2025**
(21) Application number: 24182191.7
(22) Date of filing: 14.06.2024
(51) Int. Cl.: H01M 50/213, H01M 50/262, H01M 50/264, H01M 50/271, H01M 50/291, H01M 50/507

(54) **BATTERY MODULE**

(30) Priority: 30.06.2023 KR 20230084879
(71) Applicant: Samsung SDI Co., Ltd., Yongin-si, Gyeonggi-do 17084 (KR)
(72) Inventor: Park, Dae Yeop, 16678 Suwon-si, Gyeonggi-do (KR); Kwag, No Hyun, 16678 Suwon-si, Gyeonggi-do (KR); Woo, Min Uk, 16678 Suwon-si, Gyeonggi-do (KR); Lee, Jeong Min, 16678 Suwon-si, Gyeonggi-do (KR); Yoon, Seok Bin, 16678 Suwon-si, Gyeonggi-do (KR); Hwang, Kum Yul, 16678 Suwon-si, Gyeonggi-do (KR)
(74) Representative: Gulde & Partner

(57) **Abstract**

The present disclosure relates to a battery module including a cell holder provided with an insertion region into which battery cells disposed in a plurality of columns are inserted and a blocking part which covers the insertion region into which the battery cell is not inserted.

## Description

### BACKGROUND

### 1. Field

Aspects of embodiments of the present disclosure relate to a battery module.

### 2. Discussion of Related Art

Generally, as the demand for portable electronic products such as notebook computers, video cameras, and portable phones increases rapidly and commercialization of robots, electric vehicles, and the like begins in earnest, research on high-performance secondary batteries capable of repeated charging and discharging is being actively conducted. Particularly, since lithium secondary batteries have a high energy density and operating voltage and excellent storage and lifetime characteristics, the lithium secondary batteries are widely used as energy sources for various electronic products.

The capacity of a battery module to which a plurality of cylindrical cells are applied is implemented in the combination of series and parallel connections of the cells. A cell holder is a part which determines the serial and parallel connection of the cells, arranges the cells, and fixes the cells firmly. A hole is formed in the cell holder to fix the cells, and after the cells are assembled, the battery module is filled with a urethane or silicone solution to prevent the inflow of moisture and more firmly fix the cell and wire bonding.

Meanwhile, if a missing cell is present in a compatible cell holder due to a capacity, a separate cell holder is added to the compatible cell holder to prevent the leakage of a urethane or silicone liquid solution.

The above-described information disclosed in the technology that forms the background of the present disclosure is only intended to improve understanding of the background of the present disclosure, and thus may include information that does not constitute the related art.

### SUMMARY OF THE INVENTION

An aspect of embodiments of the present disclosure is directed to providing a battery module in which cells sufficient for a capacity are mounted in a cell holder and a blocking part capable of being detachably attached to the cell holder covers an empty space of the cell holder to prevent the leakage of a liquid solution.

These and other aspects and features of the present disclosure will be described in or will be apparent from the following description of some embodiments of the present disclosure.

According to one or more embodiments, a battery module includes a cell holder provided with an insertion region into which battery cells disposed in a plurality of columns are inserted and a blocking part which covers the insertion region into which the battery cell is not inserted.

The cell holder may include a holder plate which restricts movement of the battery cell, a holder guide which is formed on the holder plate and guides the battery cell to be inserted, and a holder insertion hole which is formed in the holder plate and exposes the battery cell.

The holder plate may connect an upper portion of a holder frame formed to surround the battery cells.

An end portion of the battery cell inserted into the holder guide may be in close contact with the holder plate, and a portion of the end portion may protrude through the holder insertion hole and may be connected to a busbar.

The holder insertion hole may be formed in the holder plate disposed inside the holder guide.

The cell holder may further include a holder mounting part formed on any one of the holder plate and the holder guide and coupled to the blocking part.

The blocking part may cover the insertion region in a unit of a column.

The blocking part may include a blocking block which is mounted in the cell holder to cover the insertion region.

The blocking block may be an insulator.

The blocking block may include a block plate, one or more block protrusions formed on the block plate and inserted into the cell holder, and a block hook formed at least any one of the block plate and the block protrusion and fixedly hooked on the cell holder.

The blocking part may include a blocking sheet attached to an outer side of the cell holder to cover the insertion region.

The blocking sheet may be a tape.

The blocking sheet may include a sheet plate and a sheet adhesive formed on the sheet plate and attached to the cell holder.

The sheet plate may include a plate body which covers the insertion region and a plate interference prevention part which is formed on the plate body and prevents interference with the cell holder.

The battery module may further include a busbar disposed on the cell holder and electrically connected to the battery cell, wherein the blocking sheet may be seated on the busbar.

The blocking part may include a blocking block mounted in the cell holder to cover the insertion region and a blocking sheet attached to an outer side of the cell holder to cover the insertion region.

The blocking block may include a block plate, one or more block protrusions formed on the block plate and inserted into the cell holder, and a block hook formed on at least any one of the block plate and the block protrusion and fixedly hooked on the cell holder.

The blocking sheet may include a sheet plate and a sheet adhesive formed on the sheet plate and attached to the cell holder.

The blocking part may further include a blocking coupling part which is disposed between the blocking block and the blocking sheet to couple the blocking block and the blocking sheet.

The blocking coupling part may be manufactured of a foam material, and both surfaces of the blocking coupling part may be provided with an adhesive.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic view illustrating a battery module according to one embodiment of the present disclosure;
FIG. 2 is a schematic view illustrating a state in which a battery cell is omitted from a commonly used cell holder in the battery module according to one embodiment of the present disclosure;
FIG. 3 is a schematic view illustrating a state in which 9P battery cells are mounted in the commonly used cell holder in the battery module according to one embodiment of the present disclosure;
FIG. 4 is a schematic view illustrating a state in which 6P battery cells are mounted in the commonly used cell holder in the battery module according to one embodiment of the present disclosure;
FIG. 5 is a schematic plan perspective view illustrating a cell holder according to one embodiment of the present disclosure;
FIG. 6 is a schematic bottom perspective view illustrating the cell holder according to one embodiment of the present disclosure;
FIG. 7 is a schematic plan perspective view illustrating a blocking part according to a first embodiment of the present disclosure;
FIG. 8 is a schematic bottom perspective view illustrating the blocking part according to the first embodiment of the present disclosure;
FIG. 9 is a schematic cross-sectional view illustrating a state in which the blocking part is coupled to a cell holder according to the first embodiment of the present disclosure;
FIG. 10 is a schematic plan perspective view illustrating a blocking part according to a second embodiment of the present disclosure;
FIG. 11 is a schematic bottom perspective view illustrating the blocking part according to the second embodiment of the present disclosure;
FIG. 12 is a schematic cross-sectional view illustrating a state in which the blocking part is coupled to a cell holder according to the second embodiment of the present disclosure;
FIG. 13 is a schematic view illustrating a blocking part according to a third embodiment of the present disclosure; and
FIG. 14 is a schematic cross-sectional view illustrating a state in which the blocking part is coupled to a cell holder according to the third embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. "Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element s or feature s as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented e.g., rotated 90 degrees or at other orientations, and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between and including the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged or located or positioned on the "above or below" or "on or under" a component, it may mean that the arbitrary element is placed in contact with the upper or lower surface of the component and may also mean that another component may be interposed between the component and any arbitrary element arranged or located or positioned on or under the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

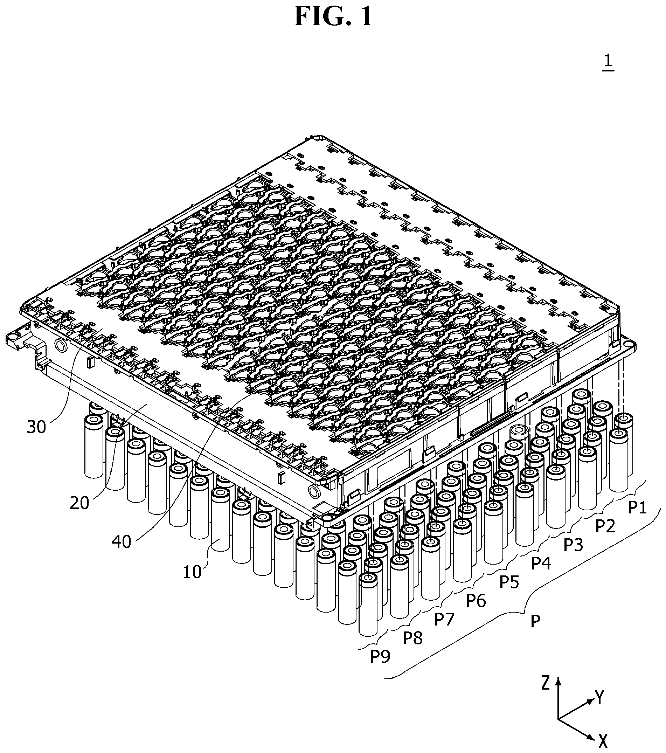

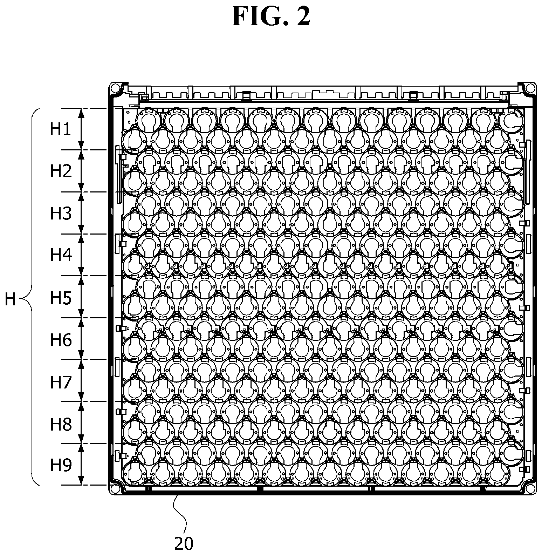

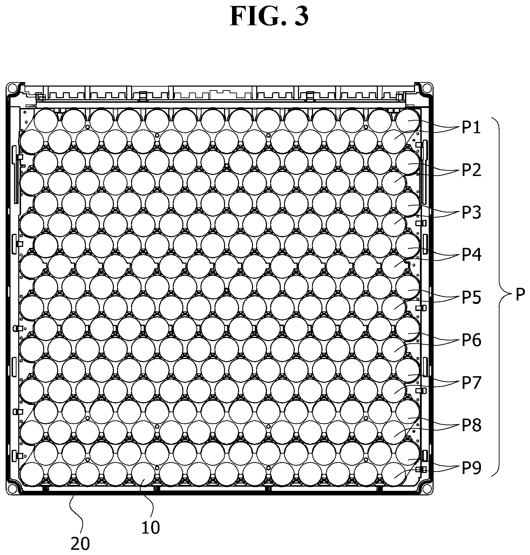

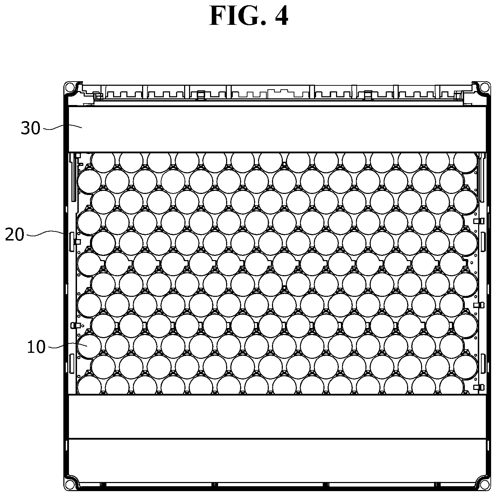

FIG. 1 is a schematic view illustrating a battery module according to one embodiment of the present disclosure, and FIG. 2 is a schematic view illustrating a state in which a battery cell is omitted from a commonly used cell holder in the battery module according to one embodiment of the present disclosure. FIG. 3 is a schematic view illustrating a state in which 9P battery cells are mounted in the commonly used cell holder in the battery module according to one embodiment of the present disclosure, and FIG. 4 is a schematic view illustrating a state in which 6P battery cells are mounted in the commonly used cell holder in the battery module according to one embodiment of the present disclosure. Referring to FIGS. 1 to 4, a battery module 1 according to one embodiment of the present disclosure includes a cell holder 20 and blocking parts 30.

A plurality of battery cells 10 may be disposed in a plurality of columns. Each of the battery cells 10 may be formed in a cylindrical shape extending in a z-direction. The plurality of battery cells 10 may be disposed in parallel in an x-direction. The battery cells 10 may be disposed in one column.

The battery cells 10 may be disposed in one column in the x-direction, or the battery cells 10 disposed in one column may be disposed in two columns in a y-direction to form one cell column P. When the cell column P is formed as a set of two columns, the battery cells 10 may be disposed to face each other in the y-direction or in a diagonal direction.

When a battery has a maximum capacity, the battery cells 10 may be disposed in a first cell column P1 to a ninth cell column P9. In addition, according to a set capacity of the battery, some of the first cell column P1 to the ninth cell column P9 may be omitted.

The battery cell 10 may be a nickel-cadmium battery, a nickel-hydrogen battery, or a lithium-ion battery. Since the lithium-ion battery has an operating voltage of about three times greater than that of the nickel-cadmium battery or the nickel-hydrogen battery, which is widely used as a power source of a portable electronic device, and a high energy density per unit weight, the lithium-ion battery may be used for various purposes.

The cell holder 20 may be provided with a plurality of insertion regions H into which the battery cells 10 are inserted. The cell holder 20 may be standardized to accommodate the battery cells 10 disposed in the first cell column P1 to the ninth cell column P9 corresponding to the maximum capacity of the battery. That is, the battery cells 10 corresponding to the first cell column P1 may be inserted into a first insertion region H1. The battery cells 10 corresponding to a second cell column P2 may be inserted into a second insertion region H2. The battery cells 10 corresponding to a third cell column P3 may be inserted into a third insertion region H3. The battery cells 10 corresponding to a fourth cell column P4 may be inserted into a fourth insertion region H4. The battery cells 10 corresponding to a fifth cell column P5 may be inserted into a fifth insertion region H5. The battery cells 10 corresponding to a sixth cell column P6 may be inserted into a sixth insertion region H6. The battery cells 10 corresponding to a seventh cell column P7 may be inserted into a seventh insertion region H7. The battery cells 10 corresponding to an eighth cell column P8 may be inserted into an eighth insertion region H8. The battery cells 10 corresponding to the ninth cell column P9 may be inserted into a ninth insertion region H9.

The cell holder 20 may be manufactured to allow all the first cell column P1 to the ninth cell column P9 to be inserted, and some of the first cell column P1 to the ninth cell column P9 may be omitted to adjust a capacity of the battery according to the concept of design. Accordingly, one cell holder 20 can be commonly used even when the arrangement of the battery cells 10 is changed to form the battery with various capacities.

The blocking part 30 may cover the insertion region H into which the battery cell 10 is not inserted according to a design capacity. The blocking part 30 may be coupled to any one of inner and outer portions of the cell holder 20 and may cover holes formed in the cell holder 20.

The blocking part 30 may cover the insertion region H in a unit of a column. That is, one blocking part 30 may cover any one of the first insertion region H1 to the ninth insertion region H9.

An end portion of each of the battery cells 10 inserted into the cell holder 20 may be externally exposed through the hole formed in the cell holder 20, busbars 40 mounted in the cell holder 20 may connect the plurality of battery cells 10, which are disposed in the first cell column P1 to the ninth cell column P9, in parallel. The busbars 40 may connect the first cell column P1 to the ninth cell column P9 in series.

When the battery cells 10 are mounted in the cell holder 20, and the battery cells 10 are electrically connect by the busbars 40, a hardener, which is not illustrated in the drawings, may cover an upper portion of the cell holder 20. The hardener may include a urethan or silicone material and may be hardened to improve a coupling strength between the cell holder 20 and the battery cells 10 and firmly fix the wire bonding of the busbars 40.

Meanwhile, the blocking part 30 may be disposed on the insertion region H of the cell holder 20 in which the battery cells 10 are omitted according to a design capacity of the battery to cover the holes formed in the cell holder 20. When the blocking part 30 covers the holes formed in the cell holder 20 and the hardener is injected, the hardener can be prevented from leaking though the holes formed in the cell holder 20.

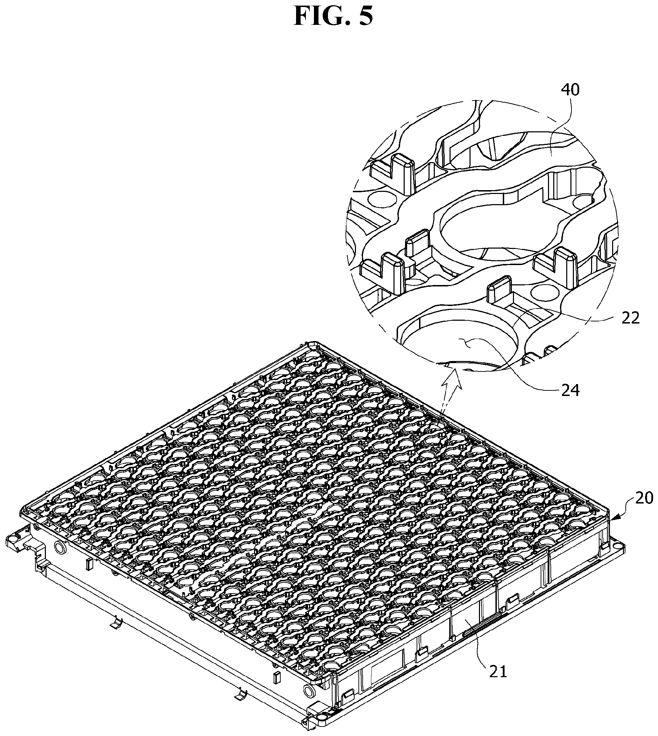

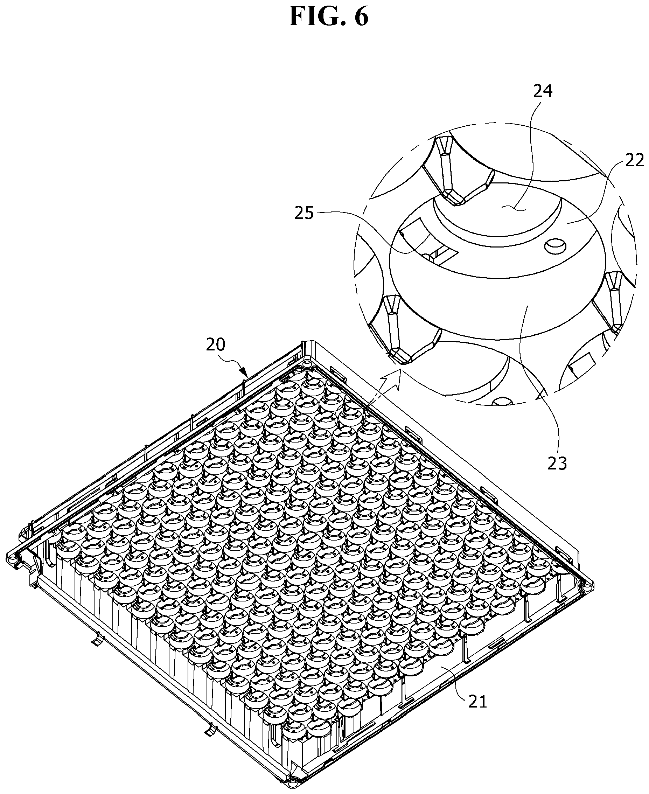

FIG. 5 is a schematic plan perspective view illustrating the cell holder according to one embodiment of the present disclosure, and FIG. 6 is a schematic bottom perspective view illustrating the cell holder according to one embodiment of the present disclosure. Referring to FIGS. 5 and 6, the cell holder 20 may include a holder plate 22, holder guides 23, and holder insertion holes 24. The cell holder 20 may include an insulating material and may be integrally injection-molded.

A holder frame 21 may be formed to surround the battery cells 10. The holder frame 21 may be formed in a quadrangular belt shape, and the plurality of battery cells 10 to be grouped in the first cell column P1 to the ninth cell column P9 may be disposed inside the holder frame 21 in units of columns.

The holder plate 22 may cover one side of the holder frame 21 and restrict the movement of the battery cells 10. The holder plate 22 may connect an upper portion of the holder frame 21. Grooves may be formed in an upper surface of the holder plate 22, and the busbars 40 may be inserted into the grooves.

The holder guides 23 may be formed in the holder plate 22 and guide the insertion of the battery cells 10. The holder guides 23 may protrude downward from the holder plate 22 so that the corresponding battery cells 10 are inserted into the first cell column P1 to the ninth cell column P9.

The holder insertion hole 24 may be formed in the holder plate 22 and may expose a portion of the battery cell 10. The holder insertion hole 24 may be formed in the holder plate 22 disposed inside each of the holder guides 23.

An end portion of the battery cell 10 inserted into the holder guide 23 may be in close contact with the holder plate 22, and a portion thereof may protrude through the holder insertion hole 24 and may be connected to the busbar 40. The busbar 40 may be disposed on the holder plate 22 and supported by the holder frame 21.

The cell holder 20 may further include holder mounting parts 25. The holder mounting part 25 may be formed on at least one of the holder plate 22 and the holder guide 23 and coupled to the blocking part 30. A hole and a hook step may be formed in the holder mounting part 25 to guide hooking.

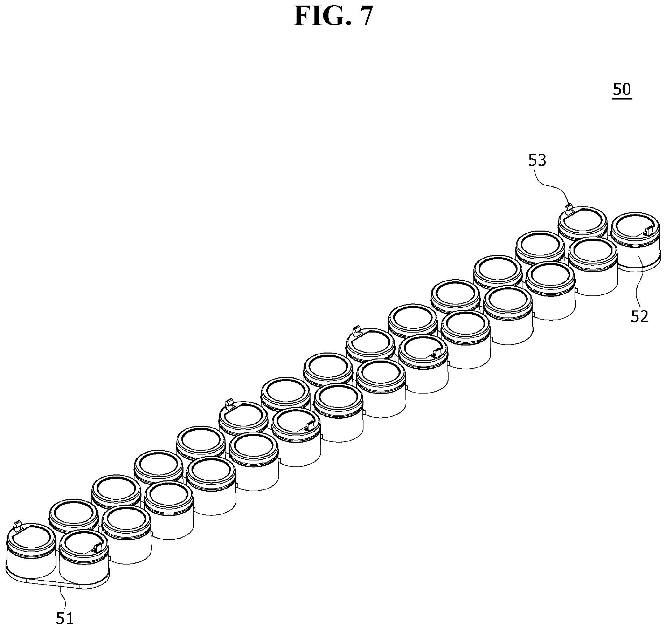

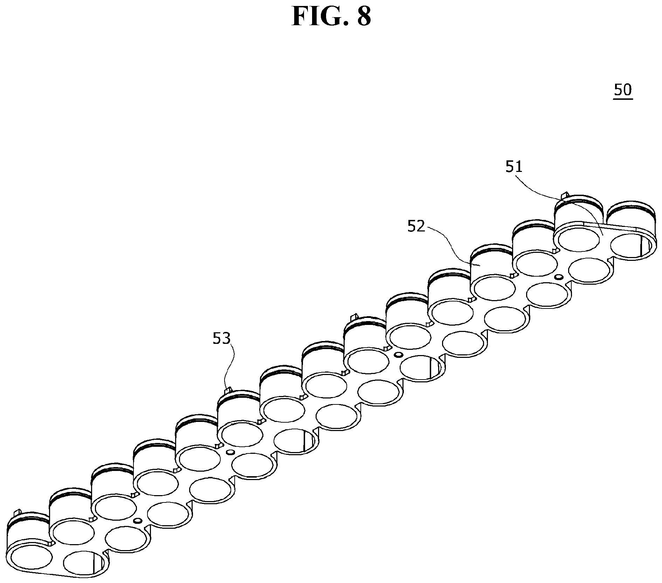

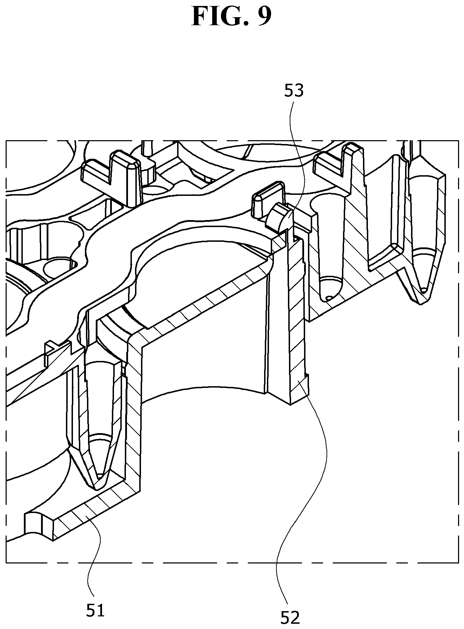

FIG. 7 is a schematic plan perspective view illustrating a blocking part according to a first embodiment of the present disclosure, FIG. 8 is a schematic bottom perspective view illustrating the blocking part according to the first embodiment of the present disclosure, and FIG. 9 is a schematic cross-sectional view illustrating a state in which the blocking part is coupled to a cell holder according to the first embodiment of the present disclosure. Referring to FIGS. 7 to 9, a blocking part 30 according to the first embodiment may include blocking blocks 50.

The blocking block 50 may be mounted in a cell holder 20 and cover an insertion region H. According to a design, some of a first cell column P1 to a ninth cell column P9 may be omitted in the commonly used cell holder 20, and the blocking block 50 may cover holder insertion holes 24 while inserted into the cell holder 20. Accordingly, even when battery cells 10 are omitted, a hardener can be prevented from leaking through the holder insertion holes 24.

More specifically, the blocking block 50 may include a block plate 51, block protrusions 52, and block hooks 53. The blocking block 50 may be manufactured of a resin material which is an insulating material, and the block plate 51, the block protrusions 52, and the block hooks 53 may be integrally formed.

The block plate 51 may be formed in a plate shape and have a length corresponding to the insertion region H. The block plate 51 may be disposed to face any one of a first insertion region H1 to a ninth insertion region H9.

One or more block protrusions 52 may be formed on the block plate 51 and may be inserted into the cell holder 20. The block protrusions 52 may protrude upward from the block plate 51. The block protrusion 52 may have a size and a position corresponding to a holder guide 23 formed in the insertion region H. The block protrusion 52 may be inserted into the holder guide 23. The block protrusion 52 may be press-fitted into the holder guide 23. A sealing may be added between the block protrusion 52 and the holder guide 23.

The block hook 53 may be formed any one of the block plate 51 and the block protrusion 52 and fixedly hooked on the cell holder 20. The block hook 53 may be formed on each of the plurality of block protrusions 52 or selectively disposed on the plurality of block protrusions 52. The block hook 53 may have a hook shape and may be fixedly hooked on the holder plate 22 after passing through a holder mounting part 25 formed on the holder plate 22.

When some of the first cell column P1 to the ninth cell column P9 are omitted, an operator opens the holder guide 23 in a state in which the cell holder 20 is flipped over. When the holder guide 23 is opened, the block protrusion 52 is inserted into the holder guide 23 so that the blocking block 50 is disposed in the cell column P from which the battery cell 10 is omitted. In a process in which the block protrusion 52 is inserted into the holder guide 23, the block hook 53 is completely hook-coupled to the holder mounting part 25. In this case, the block protrusion 52 may be in close contact with the holder plate 22 to cover the holder insertion hole 24. A sealing process may be performed between the block protrusion 52 and the holder plate 22.

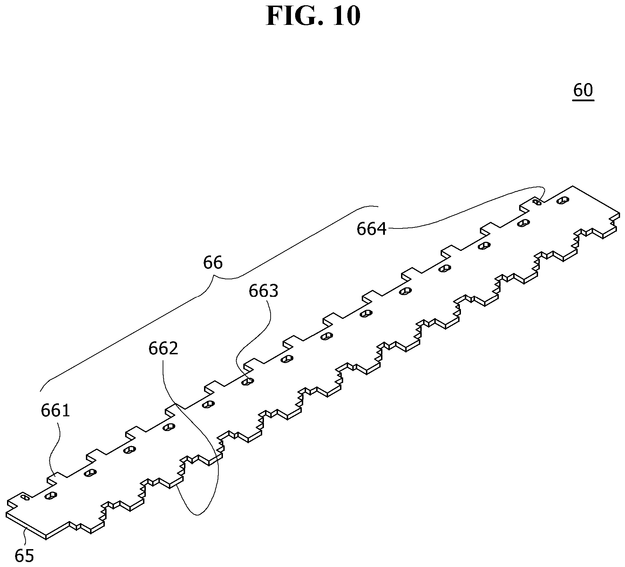

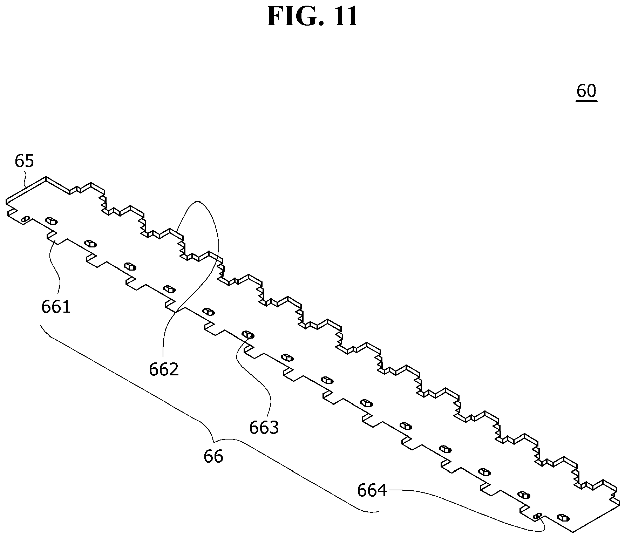

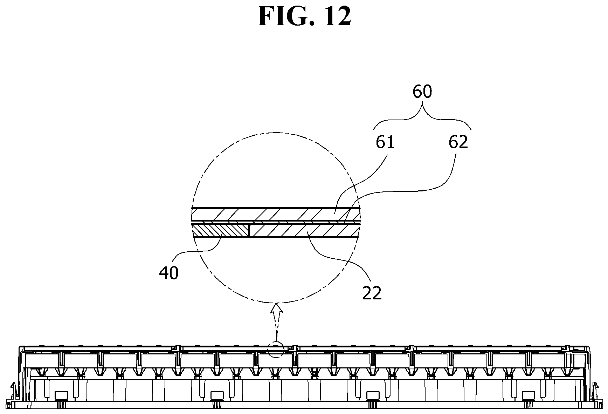

FIG. 10 is a schematic plan perspective view illustrating a blocking part according to a second embodiment of the present disclosure, FIG. 11 is a schematic bottom perspective view illustrating the blocking part according to the second embodiment of the present disclosure, and FIG. 12 is a schematic cross-sectional view illustrating a state in which the blocking part is coupled to a cell holder according to the second embodiment of the present disclosure. Referring to FIGS. 10 to 12, a blocking part 30 according to the second embodiment may include blocking sheets 60

The blocking sheet 60 may be attached to an outer side of a cell holder 20 and may cover an insertion region H. According to a design, in a commonly used cell holder 20, battery cells 10 may be omitted from some of a first cell column P1 to a ninth cell column P9, and the blocking sheet 60 may cover holder insertion holes 24 while being attached to an upper side of the cell holder 20. Accordingly, even when the battery cells 10 are omitted, a hardener can be prevented from leaking through the holder insertion holes 24.

The blocking sheet 60 may include a sheet plate 61 and a sheet adhesive 62.

The sheet plate 61 may be manufactured of an insulating material. The sheet plate 61 may be manufactured of a material including a rigid resin material or a foam material capable of absorbing shock. The sheet plate 61 may be seated on a holder frame 21 or a holder plate 22 to cover any one or more of the first cell column P1 to the ninth cell column P9.

The sheet adhesive 62 may be formed on the sheet plate 61 and attached to the cell holder 20. An upper surface of the sheet adhesive 62 may be attached to the sheet plate 61, and a lower surface thereof may be attached to the holder plate 22.

In addition, the sheet plate 61 and the sheet adhesive 62 may be integrated into a tape. When sheet adhesives 62 are attached to both surfaces of the sheet plate 61, a double-sided tape may be formed.

The sheet plate 61 may include a plate body 65 and a plate interference prevention part 66.

The plate body 65 may cover an upper side of the cell holder 20 to cover any one of the first cell column P1 to the ninth cell column P9.

The plate interference prevention part 66 may be formed on the plate body 65 and may prevent interference with the cell holder 20. The plate interference prevention part 66 may be formed in a longitudinal direction of a first side surface of the plate body 65. That is, grooves spaced apart from each other in the longitudinal direction of the first side surface of the plate body 65 may be formed, and first prevention parts 661 may be formed to protrude between the grooves. The first prevention part 661 may have a quadrangular shape. The plate interference prevention part 66 may be formed in a longitudinal direction of a second side surface of the plate body 65. That is, grooves spaced apart from each other in the longitudinal direction of the second side surface of the plate body 65 may be formed, and second prevention parts 662 may be formed to protrude between the grooves. The second prevention part 662 may have a stair shape in which steps are formed at both sides. In third prevention parts 663, holes may be formed in the plate body 65, and in fourth prevention parts 664, holes may be formed in the first prevention parts 661. When plate bodies 65 are disposed adjacent to each other to cover a plurality of cell columns P, the first prevention parts 661 may be disposed between second prevention parts 662.

The battery module 1 may further include busbars 40 disposed on the cell holder 20. The busbars 40 may electrically connect battery cells 10. When the busbars 40 are disposed on the cell holder 20, the blocking sheet 60 may be seated on the busbars 40.

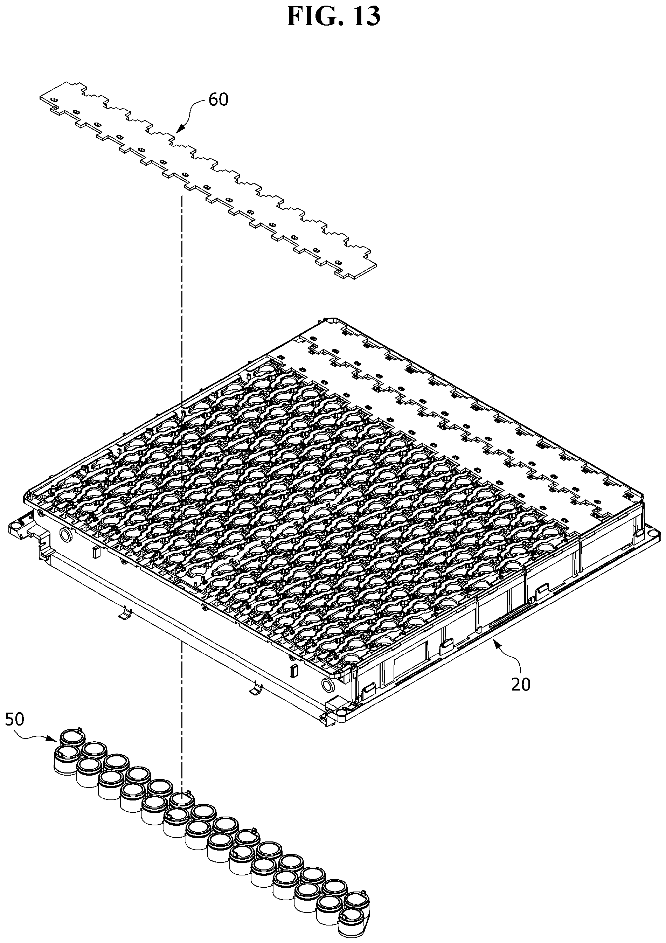

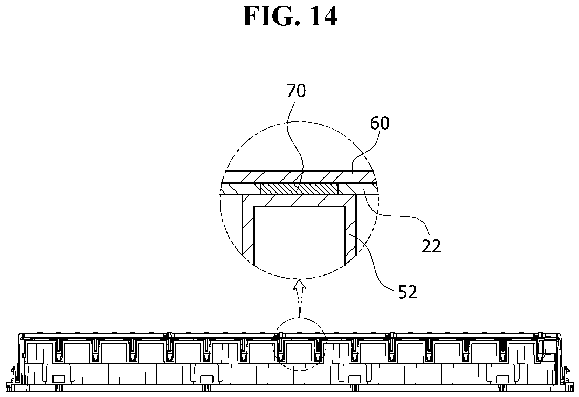

FIG. 13 is a schematic view illustrating a blocking part according to a third embodiment of the present disclosure, and FIG. 14 is a schematic cross-sectional view illustrating a state in which the blocking part is coupled to a cell holder according to the third embodiment of the present disclosure. Referring to FIGS. 13 and 14, a blocking part 30 according to the third embodiment may include blocking blocks 50 and blocking sheets 60.

The blocking block 50 may be mounted in a cell holder 20 and may cover an insertion region H, and the blocking sheet 60 may be attached to an outer side of the cell holder 20 and may cover the insertion region H. Since the blocking block 50 included in the third embodiment of the present disclosure corresponds to the blocking block 50 according to the first embodiment of the present disclosure, the detailed description thereof will be omitted. Since the blocking sheet 60 included in the third embodiment of the present disclosure corresponds to the blocking sheet 60 according to the second embodiment of the present disclosure, the detailed description thereof will be omitted. That is, in the blocking part 30 according to the third embodiment of the present disclosure, the blocking block 50 according to the first embodiment and the blocking sheet 60 according to the second embodiment may be doubly disposed to prevent leakage through holder insertion holes 24.

The blocking part 30 according to the third embodiment may further include blocking coupling parts 70. The blocking coupling part 70 may be disposed between the blocking block 50 and the blocking sheet 60 to couple the blocking block 50 and the blocking sheet 60.

Busbars 40 are seated on the cell holder 20, and the blocking sheet 60 is attached onto the busbars 40. Block protrusions 52 of the blocking block 50 are inserted into holder guides 23 and are in close contact with a holder plate 22. The blocking coupling part 70 may connected the block protrusion 52 exposed through the holder insertion hole 24 and the blocking sheet 60 to maintain a coupled state between the blocking block 50 and the blocking sheet 60. The blocking coupling part 70 may be manufactured of a foam material having a sufficient thickness, and an adhesive may be provided on upper and lower surfaces thereof so that the blocking coupling part 70 may be attached to the block protrusion 52 and the blocking sheet 60. The blocking coupling part 70 may also be attached to the holder plate 22 in addition to the block protrusion 52. The blocking coupling part 70 may be coupled to each of the block protrusions 52 or selectively coupled to any block protrusion 52.

In a battery module according to the present disclosure, since a cell holder is manufactured to be commonly used, a battery having a set capacity can be implemented by inserting a battery cell into an insertion region formed in the cell holder.

In a battery module according to the present disclosure, since an insertion region of a cell holder into which a battery cell is not inserted is covered by a blocking part, the leakage of a hardener can be prevented during a process of injecting the hardener.

In a battery module according to the present disclosure, a blocking part is disposed in a unit of a column of battery cells, a capacity of a battery can be rapidly changed at site.

In a battery module according to the present disclosure, since a blocking block is inserted into an insertion region into which a battery cell is not inserted, the leakage of a hardener can be prevented.

In a battery module according to the present disclosure, since a blocking sheet is attached to an insertion region into which a battery cell is not inserted, the leakage of a hardener can be prevented.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

## Claims

1. A battery module (1) comprising:
battery cells (10) disposed in a plurality of columns (P1 to P9);
a cell holder (20) including insertion regions (H1 to H9) into which the battery cells (10) are inserted; and
a blocking part (30) which covers an insertion region of the insertion regions (H1 to H9), into which any of the battery cells (10) is not inserted.

2. The battery module (1) as claimed in claim 1, wherein the cell holder (20) includes:
a holder plate (22) restricting movement of a battery cells (10);
holder guides (23) formed on the holder plate (22), each of the holder guides (23) guiding a battery cell of the battery cells (10) to be inserted; and
holder insertion holes (24) formed in the holder plate (22), each of the holder insertion holes (24) exposing a battery cell of the battery cells (10).

3. The battery module (1) as claimed in claim 2, wherein the battery module (1) further comprises a holder frame (21) formed to surround the battery cells (10) and
the holder plate (22) connects an upper portion of the holder frame (21).

4. The battery module (1) as claimed in claim 2 or 3, wherein the battery module further includes a busbar (40), and
an end portion of the battery cell (10) inserted into each of the holder guides (23) is in close contact with the holder plate (22), and a portion of the end portion protrudes through the holder insertion hole (24) and is connected to the busbar (40).

5. The battery module (1) as claimed in any of claims 2 to 4, wherein each of the holder insertion holes (24) is formed in the holder plate (22) and disposed inside each of the holder guides (23).

6. The battery module (1) as claimed in any of claims 2 to 5, wherein the cell holder (20) further includes a holder mounting part (25) formed on any one of the holder plate (22) and the holder guide (23) and coupled to the blocking part (30).

7. The battery module (1) as claimed in any of the preceding claims, wherein the blocking part (30) includes a blocking block (50) which is mounted in the cell holder (20) to cover the insertion region.

8. The battery module (1) as claimed in claim 7, wherein the blocking block (50) includes:
a block plate (51);
one or more block protrusions (52) formed on the block plate (51) and inserted into the cell holder (20); and
a block hook (53) formed at least any one of the block plate (51) and the block protrusion (52) and fixedly hooked on the cell holder (20).

9. The battery module (1) as claimed in any of claims 1 to 6, wherein the blocking part (30) includes a blocking sheet (60) attached to an outer side of the cell holder (20) to cover the insertion region.

10. The battery module (1) as claimed in claim 9, wherein the blocking sheet (60) includes:
a sheet plate (61); and
a sheet adhesive (62) formed on the sheet plate (61) and attached to the cell holder (20).

11. The battery module (1) as claimed in claim 10, wherein the sheet plate (61) includes:
a plate body (65) which covers the insertion region; and
a plate interference prevention part (66) which is formed on the plate body (65) and prevents interference with the cell holder (20).

12. The battery module (1) as claimed in any of claims 9 to 11, further comprising a busbar (40) disposed on the cell holder (20) and electrically connected to the battery cell (10),
wherein the blocking sheet (60) is seated on the busbar (40).

13. The battery module (1) as claimed in any of claim 1 to 6, wherein the blocking part (30) includes:
a blocking block (50) mounted in the cell holder (20) to cover the insertion region; and
a blocking sheet (60) attached to an outer side of the cell holder (20) to cover the insertion region.

14. The battery module (1) as claimed in claim 13, wherein the blocking part (30) further includes a blocking coupling part (70) which is disposed between the blocking block (50) and the blocking sheet (60) to couple the blocking block (50) and the blocking sheet (60).

15. The battery module (1) as claimed in claim 14, wherein:
the blocking coupling part (70) is of a foam material; and
the blocking coupling part (70) includes an adhesive at surfaces coupled to the blocking block (50) and the blocking sheet (60).
